# EUROPÄISCHE PATENTSCHRIFT

(11) **EP 2 375 108 B1**
(45) Veröffentlichungstag und Bekanntmachung des Hinweises auf die Patenterteilung: **22.05.2013**
(21) Anmeldenummer: 11159190.5
(22) Anmeldetag: 22.03.2011
(51) Int. Cl.: F16H 63/20, F16H 63/30, F16H 61/24

(54) **Schaltvorrichtung eines Kraftfahrzeugwechselgetriebes**
Shifting device of a vehicluar change gear transmission
Dispositif de commande d'une boîte de vitesses d'un véhicule

(30) Priorität: 06.04.2010 DE 102010013938
(43) Veröffentlichungstag der Anmeldung: 12.10.2011
(73) Patentinhaber: Schaeffler Technologies AG & Co. KG, 91074 Herzogenaurach (DE)
(72) Erfinder: Krämer, Klaus, 91438, Lenkersheim (DE); Löffelmann, Jochen, 91330, Eggolsheim (DE)

(56) Entgegenhaltungen:
- EP-A2- 1 762 755
- DE-A1- 10 332 494
- DE-A1-102007 054 548
- DE-U1- 29 615 599
- JP-A- 11 022 823

## Beschreibung

### Gebiet der Erfindung

Die Erfindung betrifft eine Schaltvorrichtung eines Kraftfahrzeugzahnräderwechselgetriebes mit einem zu einem Gehäuse beweglichen Schaltelement zum Wählen oder Schalten von Gängen oder Gassen, wobei zumindest einigen Gängen oder Gassen Begrenzungsmittel zugeordnet sind, die Anschläge zur Schaltwegbegrenzung bilden, wobei über die Anschläge die Endlagen der Schalt- bzw. Wählbewegungen so einstellbar sind, dass fertigungsbedingte Toleranzen der Schaltvorrichtung kompensierbar sind.

### Hintergrund der Erfindung

Bei der Montage eines Kraftfahrzeugs werden in der Regel das Kraftfahrzeuggetriebe und die Schalthebelanordnung, die den Schalthebel zum Schalten der Gänge des Kraftfahrzeuggetriebes enthält, unabhängig voneinander in das Kraftfahrzeug eingebaut. Das Kraftfahrzeuggetriebe und die Schalthebelanordnung sind über ein Schaltelement als Verbindungsmittel, beispielsweise eine Schaltstange, miteinander verbunden, wobei der Schalthebel in einer Schaltkulisse geführt ist. Die Schaltkulisse dient dazu, den Bediener des Fahrzeugs beim Einlegen eines entsprechenden Gangs zu unterstützen und weist dazu Führungsbahnen auf, die auch als Wähl- bzw. Schaltgassen bezeichnet werden. Der Schalthebel lässt sich lediglich innerhalb dieser Gassen bewegen, wodurch das Einlegen eines Gangs des Getriebes für den Bediener vereinfacht wird und er ein Gefühl dafür bekommt, welchen Gang er einlegt, ohne den Schaltvorgang optisch zu überwachen. Häufig wird die Schaltkulisse an dem Kraftfahrzeuggetriebe verschweißt.

Bei der Montage der Schaltkulisse ist jedoch ihre genaue Positionierung zu beachten, da eine ungenau platzierte Schaltkulisse zu einer nicht vorgesehenen manuellen Schaltbewegung führt, die erhöhten Verschleiß der Zahnräder, eine Beschädigung oder gar eine Zerstörung des Getriebes zur Folge haben kann. Die genaue Positionierung der Schaltkulisse gestaltet sich in der Praxis jedoch häufig schwierig, da der Schalthebel das Ende einer langen Reihe von miteinander gekoppelten Elementen bildet. Da für jedes Element in dieser Toleranzreihe ein eigener Toleranzbereich definiert ist, summieren sich die Toleranzbereiche über die gesamte Reihe auf, so dass am Schalthebel bzw. der Führung des Schalthebels in der Schaltkulisse sehr hohe Summentoleranzen zu beachten sind. Die Toleranzen müssen bei der Verbindung des Kraftfahrzeuggetriebes mit der Schalthebelanordndung ausgeglichen werden, da ansonsten die Position des Schalthebels nicht genau mit dem geschalteten Gang übereinstimmt. Dadurch wird das Einlegen der verschiedenen Gänge erschwert, wenn nicht sogar verhindert.

Zur Lösung dieses Problems ist in DE 10 2007 027 701 A1 eine im Getriebegehäuse angefederte Schaltkulisse vorgesehen, die aufgrund ihrer Verschiebbarkeit selbständig einen einfachen Toleranzausgleich bewerkstelligt. Die Lösung ist technisch aufwändig und erfordert einen verhältnismäßig großen Bauraum.

DE 10 2007 004 455 A1 schlägt vor, den Schalthebel über eine lösbare Montagevorrichtung während der Montage zeitweilig mit dem Schalthebelgehäuse zu befestigen. Die Anfälligkeit für Fehlmontagen ist so reduziert, allerdings ist eine individuelle Berücksichtigung der Toleranzen für jede Schaltgasse nicht vorgesehen.

EP 1 126 198 A1 offenbart einen Axialanschlag mit einem weichen Dämpfungselement in Form einer Rastkontur, gegen die ein Arretierelement vorgespannt ist.

Gemäß DE 10 2007 054 548 A1 ist ein harter, mechanischer Endanschlag in die Gassenführung integriert.

JP 11 022823 A offenbart eine Schaltvorrichtung mit den Merkmalen des Oberbegriffs von Anspruch 1.

Die im Stand der Technik bekannten Lösungen weisen jedoch den Nachteil auf, dass sie die Toleranzen nur begrenzt vermindern können, wobei nicht sichergestellt ist, dass dies für alle Schaltstellungen gelingt. Weisen beispielsweise die Schaltgabeln jeweils eigene Toleranzbereiche auf, so kann eine Kompensation nicht Ober die für alle Schaltgabeln gleiche Gassenführung erreicht werden. Weiterhin lösen derartige Schalteinheiten nicht das Problem, dass die Schaltgabeln im geschalteten Zustand dauerhaft die Schiebemuffe belasten, daher Vibrationen vom Getriebe auf das Schaltgestänge übertragen und für den Bediener fühlbar werden.

Zur weiteren Verringerung der Toleranzen ist es erforderlich, die einzelnen Getriebebauteile jeweils für sich mit höherer Präzision herzustellen und/oder aber ein Ausgleichen mit Hilfselementen wie Zusatzscheiben durch Zusortieren. Dies ist mit hohem Aufwand und häufig auch mit höherem Gewicht verbunden.

### Zusammenfassung der Erfindung

Der Erfindung liegt daher die Aufgabe zugrunde, eine Schaltvorrichtung zu schaffen, die sicherstellt, dass in den Endlagen der Schaltstufen keine Vibrationen auf den Schalthebel übertragen werden, die einfach herstellbar und montierbar ist und die Serienstreuungen sowie Einbautoleranzen kompensieren kann.

Diese Aufgabe wird durch eine Schaltvorrichtung nach Anspruch 1 gelöst. Die Begrenzungsmittel stützen sich zum einen direkt am Gehäuse ab und zum anderen direkt an dem Schaltelement, sofern sich der Schalthebel in der durch das entsprechende Begrenzungsmittel vorgegebenen Endlage befindet. Dadurch wird erreicht, dass die die Begrenzungsmittel führenden oder haltenden Bauteile wie Führungsstifte nicht belastet werden. Sie sind somit besonders einfach herstellbar, da sie nicht kraftbelastet sind. Unter direktem Abstützen wird verstanden, dass keine Zwischenbauteile mit Hebelkräften oder Momenten so belastet sind, dass diese verbiegen, ausweichen oder sich verformen könnten. Die Begrenzungsmittel können also auch in einer Gehäusebohrung angeordnet sein, in der zwischen den Begrenzungsmitteln und der Wandung der Gehäusebohrung radial eine Führungshülse angeordnet ist, die beispielsweise den Zusammenbau erleichtert.

Die Begrenzungsmittel sind durch eine Halterung gemeinsam fixierbar. Somit ist es entbehrlich, jedes der einmal eingestellten und auf die Toleranzen des jeweiligen Ganges abgestimmten Begrenzungsmittels für sich lagezufixieren und gegebenenfalls mittels Distanzstücken, Schrauben oder sonstiger Hilfsmittel in seiner eingestellten Position zu halten. Vielmehr werden alle vorpositionierten Begrenzungsmittel gleichzeitig durch die Halterung fixiert.

In einer Weiterbildung ist die Halterung stiftförmig ausgebildet. Auf dem Stift sind nacheinander Begrenzungsmittel unterschiedlicher Größe und/oder Form angeordnet. Vorteilhaft ist es, den Stift mit einem nicht-runden Querschnittsprofil, mit einem Versatz oder mit einem zu den Begrenzungsmitteln exzentrisch verlaufendem Querschnitt zu versehen, um ein Verdrehen bei der Montage auszuschließen.

Vorzugsweise weist die Schalteinheit für jede Gangstellung einen separates Begrenzungsmittel auf.

Besonders einfach handhabbar ist eine Einheit aus der Halterung und den Begrenzungsmitteln, wenn die Begrenzungsmittel in der Halterung verliersicher und auch untereinander verdrehsicher geführt sind. Eine stiftförmige Halterung mit diesen Eigenschaften wird im folgenden als Führungsstift bezeichnet. Auf den Führungsstiften können die Begrenzungsmittel verklemmt oder verpresst sein. Alternativ sind sie formschlüssig gehalten.

Mittels der erfindungsgemäßen Schalteinheit kann auf besonders einfache Weise erreicht werden, dass im geschalteten Zustand eines Ganges die in eine Nut einer Schiebemuffe eingreifende Schaltgabel des Gangzahnräderwechselgetriebes einen definierten Abstand von den Schiebemuffennutwandungen aufweist bzw. nicht kraftbelastet an diesen anliegt und sich somit im Fahrbetrieb daher keine störenden Vibrationen auf die äußere Schaltung übertragen. Dazu werden beispielsweise Begrenzungsmittel eingesetzt, die nicht den vollen durch die Getriebegeometrie theoretisch möglichen Verschiebeweg zulassen. Alternativ werden die Begrenzungsmittel ausgetauscht, modifiziert oder lageversetzt angeordnet, dass nur ein eingeschränkter Schaltweg zugelassen wird.

Zur Ermittlung der geeigneten Begrenzungsmittel wird beispielsweise ein Teststift mit Begrenzungsmitteln in die Schaltvorrichtung eingeführt. Die Begrenzungsmittel weisen auf einem Teilumfang ihrer Außenkontur einen zunehmenden Radius zum Stift auf. Zunächst wird dann der maximal mögliche Schaltweg ermittelt, wobei bei dieser Ermittlung die Begrenzungsmittel verdreht werden. Anschließend wird der Teststift entfernt und die Begrenzungsmittel werden lageorientiert auf einem Führungsstift angeordnet. Dabei können sie gezielt um ein gewisses weiteres, in der Regel gemeinsames Maß verdreht werden, um die gewünschte Verschiebewegbegrenzung zu realisieren.

Alternativ werden rechnerisch oder durch Ausmessen von Schaltelementen die erforderlichen Durchmesser bzw. Formen der Begrenzungsmittel ermittelt. Dazu können die Begrenzungsmittel auf einen Normführungsstift angeordnet werden, der vorläufig in die Schaltvorrichtung geschoben wird. Die zurückgelegten Schaltwege werden gemessen und die erforderlichen Geometrien für die Begrenzungsmittel errechnet. Die geeigneten, zugepaarten Begrenzungsmittel werden dann auf dem Führungsstift angeordnet und mit dem Gehäuse verbunden.

Zur Ermittlung der passenden Begrenzungsmittel ist es ebenfalls möglich, die Gänge nicht voll durchzuschalten, sondern nur einen gewissen Schaltweg zu verfahren und die Begrenzungsmittel in den so eingestellten Positionen zu fixieren.

Schließlich ist es möglich, die Gänge durchzuschalten und in den Bohrungen beispielsweise allein durch optische Mittel die Endpositionen des mit der Anschlagsfläche wechselwirkenden Bauteils zu messen. Die Begrenzungsmittel können entsprechend zugeordnet werden.

Jedes Begrenzungsmittel weist einen Anschlag und eine Abstützfläche als Funktionsflächen auf. Im übrigen können die Begrenzungsmittel beliebig geformt sein. In einer Variante ist die Abstützfläche teilkreiszylindrisch zu einer Bohrung im Gehäuse ausgebildet, und der Anschlag ist eine gegenüber der Abstützfläche zurückgenommene, gegenüberliegende, bogenförmig ausgebildete Fläche für das Schaltelement. Das Schaltelement kann ein in eine Schaltkulisse eingreifender Schaltfinger sein, eine Schaltschiene bzw. Schaltstange oder aber ein an einer Schaltwelle angeordnetes Bauteil wie eine Schaltgabel. Vorzugsweise handelt es sich bei dem Bauteil um eine Schaltwelle.

In einer Variante sind die Begrenzungsmittel mit einer Halterung zu einer Einheit vormontiert. Die Einheit ist vorzugsweise lösbar mit dem Getriebegehäuse verbunden. Eine Integration in den Schaltdom oder in die Lagerung des Schaltelements ermöglicht ein Vormontieren der Gesamteinheit.

Die Erfindung ermöglicht es nicht nur, in unaufwändiger Weise herstellungsbedingte Toleranzen der einzelnen Bauteile auszugleichen, sondern auch die durch den jeweiligen Einbau und Zusammenbau verursachten Toleranzen zu verringern. Dabei kann es sowohl um den Ausgleich systematischer als auch zufälliger Toleranzen handeln.

### Kurze Beschreibung der Zeichnungen

Die Erfindung wird nachfolgend anhand von Ausführungsbeispielen erläutert. Es zeigen:
- Figur 1: einen ersten Schaltdom mit einer Schaltwelle,
- Figur 2: eine perspektivische Darstellung eines Ausschnitts eines erfindungsgemäßen Schaltdoms,
- Figur 3: einen perspektivischen Detailausschnitt nach Figur 2 in gedrehter Ansicht,
- Figur 4: einen Teilausschnitt eines Längsschnitts des Schaltdoms nach Figur 2,
- Figur 5: einen Führungsstift mit Begrenzungsmitteln für einen Schaltdom nach Figur 2 und
- Figur 6: eine vergrößerte, perspektivische Darstellung eines Begrenzungsmittels nach Figur 5.

### Detaillierte Beschreibung der Zeichnungen

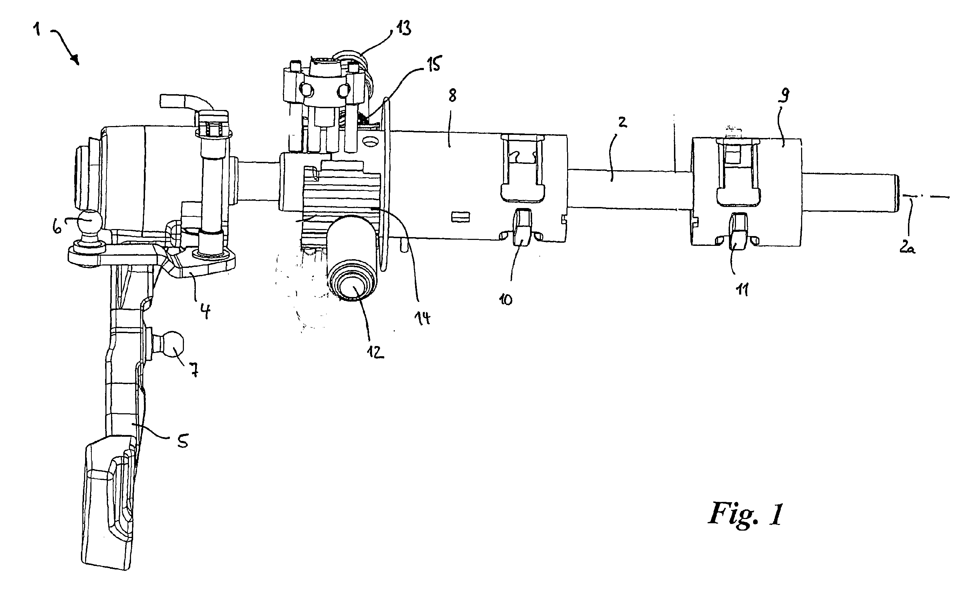

In Figur 1 ist eine Schaltvorrichtung 1 in Form eines Schaltdoms mit einem Gehäuse 3 dargestellt. Die Schaltvorrichtung 1 weist eine Schaltwelle als Schaltelement 2 auf, die in dem Gehäuse 3 axialverschieblich und um ihre Längsmittelachse 2a schwenkbar gelagert ist. Eine Bewegung der Schaltwelle 2 erfolgt durch den Wählhebel 4 bzw. den Schalthebel 5, die über Kugelköpfe 6, 7 mit nicht dargestellten Seilzügen eines Gangschalthebels verbunden sind. Auf der Schaltwelle 2 sind Schalthülsen 8, 9 aus Blech verpresst, die Schaltfinger 10, 11 zur Betätigung von nicht weiter dargestellten Schiebemuffen verschiebenden Schaltgabeln tragen. Am Gehäuse 3 der Schaltvorrichtung 1 sind zwei zylindrische Arretierungen 12, 13 angeordnet, die jeweils gegen Rastkonturen 14, 15 vorgespannt sind. Die gegen die Rastkonturen 14, 15 vorgespannten Arretierungen bewirken zum einen, dass der Fahrer eine haptische Rückmeldung über den Schaltverlauf erhält, zum anderen sichern sie die Gangstellung, so dass ein unbeabsichtigtes Herausspringen des Gangs verhindert wird. Die Rastkonturen 14, 15 sind mit der Schalthülse 8 verschweißt.

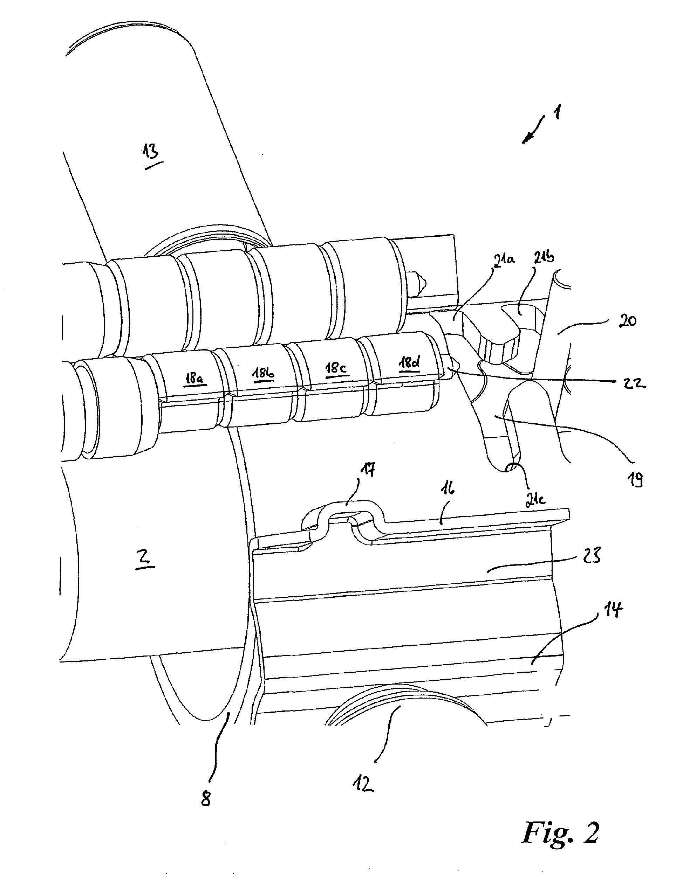

Figur 2 zeigt einen Ausschnitt einer erfindungsgemäßen Schaltvorrichtung 1 mit den in Figur 1 beschriebenen Bauteilen. Die Rastkontur 14 weist an ihren in Umfangsrichtung weisenden Enden 16 jeweils eine vorspringende Nase 17 auf, die beim Schalten eines Gangs in eine Endstellung verdreht wird und dazu gegen ein bestimmtes Begrenzungsmittel 18a-18d anschlägt, so dass eine weitere Verdrehung unterbunden wird. Der in eine Schaltkulisse 19 eingreifende Gangstift 20 verfährt in der Regel damit nicht die möglichen Kulissenanschläge 21a-21b sondern wird durch das entsprechende Begrenzungsmittel 18a -18d und die in einer Rastausnehmung 23 verrastete Arretierung 12 in der definierten Gangstellung gehalten.

Die in Figur 2 dargestellten Begrenzungsmittel 18a-18d sind koaxial zur Schaltwelle 2 auf einem Führungsstift 22 gehäusefest angeordnet. Die einzelnen Begrenzungsmittel 18a-18d sind Schaltgassen zugeordnet, die durch die Schaltkulisse 19 vorgegebenen sind. Beim Wählen wird die Schaltwelle 2 mit der Schalthülse 8 axial verschoben, so dass die Nase 17 nur an dem für die gewählte Schaltgasse vorgesehenen Begrenzungsmitteln 18a-18d anschlagen kann. Die in Figur 2 dargestellten Begrenzungsmittel 18a-18d stellen die Anschläge für die ungeraden Gangstufen dar.

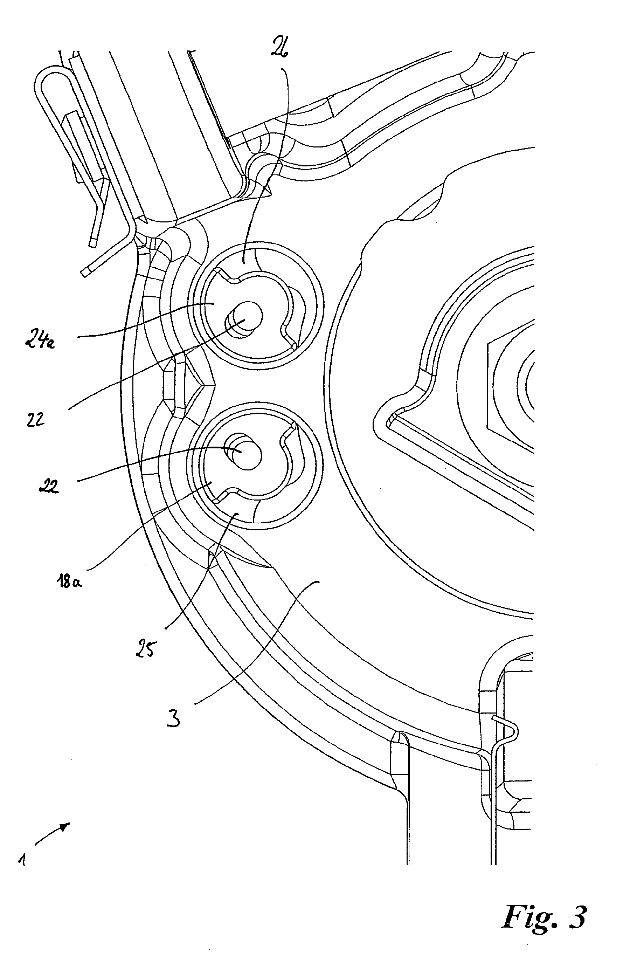

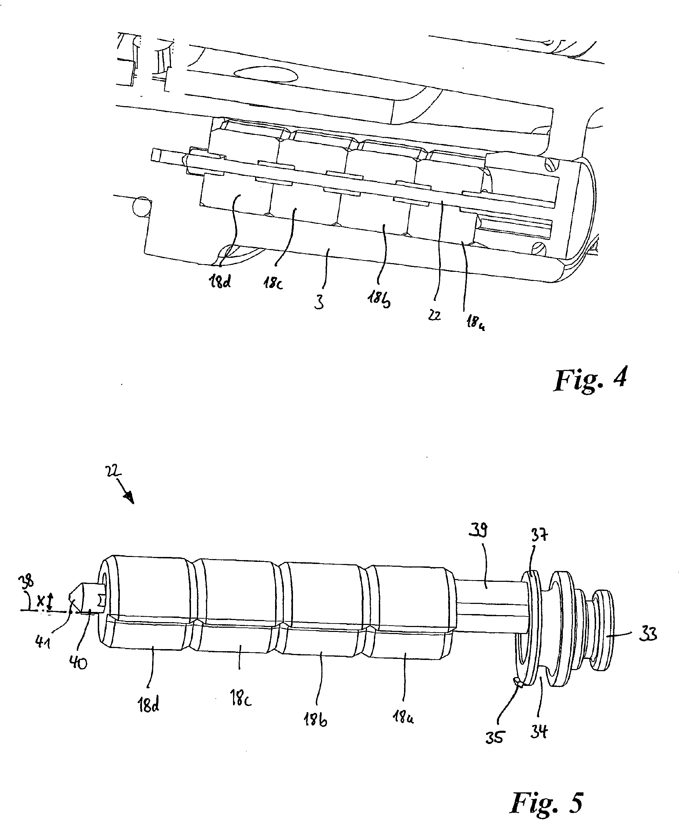

Aus den Figuren 3 und 4 geht hervor, dass die zylindrischen Begrenzungsmittel 18a-18d, 24a-24d jeweils in Gehäusebohrungen 25, 26 angeordnet sind und sich mit Halbkreiszylindersegmenten 27 ihrer Mantelflächen 28 direkt am Gehäuse 3 abstützen. Die Begrenzungsmittel 18a-18d, 24a-24d weisen Durchgangsausnehmungen 29 auf, über die sie auf einem bzw. zwei Führungsstiften 22 angeordnet sind. Die Führungsstifte 22 sind erfindungsgemäß im Betrieb der Schaltvorrichtung 1 nicht oder nur unwesentlich belastet, so dass sie aus Kunststoff oder Aluminium herstellbar sind, während die Begrenzungsmittel 18a-18d, 24a-24d beispielsweise als Sinter- oder Stanzteile gefertigt werden.

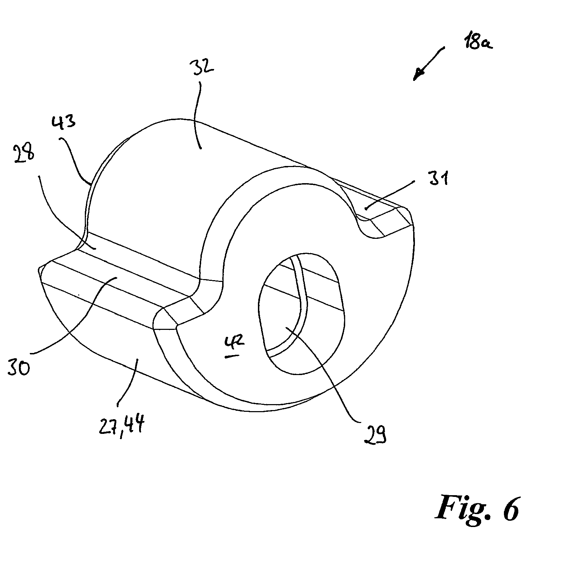

Ein Begrenzungsmittel 18a ist in Figur 6 dargestellt. Es ist als zylindrisches Bauteil ausgebildet, wobei ein erster, sich am Gehäuse 3 abstützender Abschnitt 44 der Mantelfläche 28 als Halbkreiszylindersegment 27 gestaltet ist und sich über dieses in der entsprechenden Bohrung 25, 26 abstützt. Das Halbkreiszylindersegment 27 weist in einer Querschnittsfläche in etwa halbkreisförmig und weist einen größeren Radius auf als die übrigen Abschnitte der Mantelfläche 28. An das Halbkreiszylindersegment 27 schließen sich jeweils radial verlaufende Absätze 30, 31 als dritte und vierte Abschnitte an, die nicht notwendigerweise von gleicher Breite sein müssen. Die Absätze 30, 31 sind über eine Anschlagsfläche 32 der Mantelfläche 28 als zweitem Abschnitt 45 der Mantelfläche 28 miteinander verbunden. An der Anschlagfläche 32 bzw. an einem Teil von ihr schlagen die Nase 17 oder ein separates, mit der Schaltwelle 2 verbundenes Teil der Schaltvorrichtung 1 an. Die Anschlagfläche 32 ist ebenfalls halbkreiszylindrisch ausgebildet und symmetrisch zum Halbkreiszylindersegment 27 angeordnet. Sind die zu den Kreiszylinderflächen 27, 32 zugehörigen Mittelpunkte bzw. -achsen wie in diesem Fall identisch, ist das Begrenzungselement 18a bei der Montage über einen großen Bereich gegenüber Winkeltoleranzen unempfindlich. In einer nicht dargestellten Alternativform beschreibt die Anschlagsfläche 32 im Querschnitt eine Kurve mit zunehmendem Radius.

An den Stirnflächen 42, 43 weist das Begrenzungsmittel 18a eine Durchgangsausnehmung 29 in Form eines Langlochs für einen Führungsstift 22 auf.

In Figur 5 ist ein Führungsstift 22 mit vier Begrenzungsmitteln 18a-18d dargestellt. Der Führungsstift 22 weist an seinem Kopfende einen Griff 33 für die Montage bzw. zur möglichen Demontage auf. An den ringförmigen Griff 33 schließt sich eine Nut 34 für einen O-Ring an, der die Abdichtung zum Gehäuse 3 sicherstellt. An einer der Nutwände 37 ist ein Haltemittel 35 zum Verschnapschnappen im Gehäuse 3 angeordnet. Damit ist der Führungsstift 22 mit den Begrenzungsmitteln 18a-18d als Einheit demontierbar.

An die Nutwand 37 schließt eine um einen Versatz X exzentrisch zur Stiftachse 38 verlaufende Führungsschiene 39 an, auf der die Begrenzungsmittel 18a-18d verdrehsicher angeordnet sind. Dazu weist die Führungsschiene 39 ein nicht rundes Längsprofil auf, das nicht notwendigerweise komplementär zu den Durchgangsausnehmungen 29 der Begrenzungsmittel 18a-18d sein muss, da der Führungsstift 22 während des Betriebs kraftfrei ist. Die exzentrische Anordnung stellt sicher, dass die Begrenzungsmittel lageorientiert verbaut werden (Verdrehsicherung). Die Führungsschiene 39 geht endseitig in einen kreiszylindrischen Abschnitt 40 über, der mit einer Einführhilfe 41 versehen ist.

### Bezugszahlen

- 1: Schalteinheit
- 2: Schaltwelle
- 2a: Längsachse
- 3: Gehäuse
- 4: Wählhebel
- 5: Schalthebel
- 6: Kugel kopf
- 7: Kugel kopf
- 8: Schalthülse
- 9: Schalthülse
- 10: Schaltfinger
- 11 1: Schaltfinger
- 12: Arretierung
- 13: Arretierung
- 14: Rastkontur
- 15: Rastkontur
- 16: Ende
- 17: Nase
- 18a-d: Begrenzungsmittel
- 19: Schaltkulisse
- 20: Gangstift
- 21 a-b: Kulissenanschläge
- 22: Führungsstift
- 23: Rastausnehmung
- 24a-d: Begrenzungsmittel
- 25: Gehäusebohrung
- 26: Gehäusebohrung
- 27: Halbkreiszylindersegment
- 28: Mantelfläche
- 29: Durchgangsausnehmung
- 30: Absatz
- 31: Absatz
- 32: Anschlagfläche
- 33: Griff
- 34: Nut
- 35: Haltemittel
- 36: (nicht belegt)
- 37: Nutwand
- 38: Stiftachse
- 39: Führungsschiene
- 40: Abschnitt
- 41: Einführhilfe
- 42: Stirnfläche
- 43: Stirnfläche
- 44: erster Abschnitt
- 45: zweiter Abschnitt
- X: Versatz

## Patentansprüche

1. Schaltvorrichtung (1) eines Kraftfahrzeugzahnräderwechselgetriebes mit einem zu einem Gehäuse (3) beweglichen Schaltelement (2) zum Schalten von Gängen, wobei Zumindest einigen Gängen Begrenzungsmittel (18a-d, 24a-d) zugeordnet sind, die Anschläge zur Begrenzung der Schaltbewegungen bilden, wobei über die Anschläge die Endlagen der Schaltbewegungen so einstellbar sind, dass fertigungsbedingte Toleranzen des jeweiligen Ganges kompensierbar sind und die Begrenzungsmittel (18a-d, 24a-d) sich in den Endlagen sowohl direkt an dem Schaltelement (2) als auch direkt am Gehäuse (3) abstützen, **dadurch gekennzeichnet, dass** die Begrenzungsmittel (18a-d, 24a-d) durch eine Halterung (22) gemeinsam fixierbar sind.

2. Schaltvorrichtung (1) nach Anspruch 1, **dadurch gekennzeichnet, dass** die Begrenzungsmittel (18a-d, 24a-d) im Wesentlichen zylindrisch ausgebildet sind, wobei sich eine Durchgangsausnehmung (29) von einer Stirnfläche (42) zur gegenüberliegenden Stirnfläche (43) erstreckt und die Begrenzungsmittel (18a-d, 24a-d) sich über erste Abschnitte (44) der Mantelflächen (28) am Gehäuse (2) abstützen.

3. Schaltvorrichtung (1) nach Anspruch 2, **dadurch gekennzeichnet, dass** die Begrenzungsmittel (18a-d, 24a-d) zweite kreiszylindrische Abschnitte (45) auf den Mantelflächen (28) aufweisen, die denselben Mittelpunkt wie und einen kleineren Radius als die ersten Abschnitte (44) aufweisen.

4. Schaltvorrichtung (1) nach Anspruch 1, **dadurch gekennzeichnet, dass** die Begrenzungsmittel (18a-d, 24a-d) Ausnehmungen (29) in Form von Langlöchern aufweisen.

5. Schaltvorrichtung (1) nach Anspruch 1, **dadurch gekennzeichnet, dass** mehrere Begrenzungsmittel (18a-d, 24a-d) auf einem Führungsstift (22) verdrehfest angeordnet sind.

6. Schaltvorrichtung (1) nach Anspruch 5, **dadurch gekennzeichnet dass** der Führungsstift (22) in einer Bohrung (25, 26) des Gehäuses (3) lösbar gehaltert ist.

7. Schaltvorrichtung (1) nach Anspruch 6, **dadurch gekennzeichnet, dass** der Führungsstift (22) eine Führungsschiene (39) zur Aufnahme der Begrenzungsmittel (18a-d, 24a-d) aufweist, die exzentrisch zur Bohrung (25, 26) im Gehäuse (3) angeordnet ist.

## Claims

1. Shifting apparatus (1) of a motor-vehicle change-speed gearbox having a shifting element (2) which can be moved with respect to a housing (3) in order to shift gears, at least some gears being assigned limiting means (18a-d, 24a-d) which form stops for limiting the shifting movements, it being possible for the end positions of the shifting movements to be set via the stops in such a way that production-induced tolerances of the respective gear can be compensated for and, in the end positions, the limiting means (18-d, 24a-d) are supported both directly on the shifting element (2) and directly on the housing (3), **characterized in that** the limiting means (18a-d, 24a-d) can be fixed jointly by way of a holder (22).

2. Shifting apparatus (1) according to Claim 1, **characterized in that** the limiting means (18a-d, 24a-d) are of substantially cylindrical configuration, a passage recess (29) extending from one end face (42) to the opposite end face (43) and the limiting means (18a-d, 24a-d) being supported on the housing (3) via first sections (44) of the circumferential faces (28).

3. Shifting apparatus (1) according to Claim 2, **characterized in that** the limiting means (18a-d, 24a-d) have second circular-cylindrical sections (45) on the circumferential faces (28), which second circular-cylindrical sections (45) have the same centre point as and a smaller radius than the first sections (44).

4. Shifting apparatus (1) according to Claim 1, **characterized in that** the limiting means (18a-d, 24a-d) have recesses (29) in the form of slots.

5. Shifting apparatus (1) according to Claim 1, **characterized in that** a plurality of limiting means (18a-d, 24a-d) are arranged in a rotationally fixed manner on a guide pin (22).

6. Shifting apparatus (1) according to Claim 5, **characterized in that** the guide pin (22) is secured releasably in a hole (25, 26) of the housing (3).

7. Shifting apparatus (1) according to Claim 6, **characterized in that** the guide pin (22) has a guide rail (39) for receiving the limiting means (18a-d, 24a-d), which guide rail (39) is arranged eccentrically with respect to the hole (25, 26) in the housing (3).

## Revendications

1. Dispositif de commande (1) d'une boîte de vitesses à engrenages d'un véhicule automobile comprenant un élément de commutation (2) déplaçable par rapport à un boîtier (3) pour commuter des rapports, au moins certains rapports étant associés à des moyens de limitation (18a-d, 24ad), qui forment des butées pour limiter les mouvements de commutation, les positions de fin de course des mouvements de commutation pouvant être ajustés par le biais des butées de telle sorte que des tolérances de fabrication de chaque rapport puissent être compensées et les moyens de limitation (18a-d, 24a-d) s'appuyant dans les positions de fin de course directement contre l'élément de commutation (2) et directement contre le boîtier (3), **caractérisé en ce que** les moyens de limitation (18a-d, 24a-d) peuvent être fixés ensemble par une fixation (22).

2. Dispositif de commande (1) selon la revendication 1, **caractérisé en ce que** les moyens de limitation (18a-d, 24a-d) sont réalisés essentiellement sous forme cylindrique, un évidement de passage (29) s'étendant depuis une face frontale (42) jusqu'à la face frontale opposée (43) et les moyens de limitation (18a-d, 24a-d) s'appuyant par le biais de premières portions (44) des surfaces d'enveloppe (28) contre le boîtier (3).

3. Dispositif de commande (1) selon la revendication 2, **caractérisé en ce que** les moyens de limitation (18a-d, 24a-d) présentent des deuxièmes portions cylindriques circulaires (45) sur les surfaces d'enveloppe (28), lesquelles présentent le même centre et un rayon plus petit que les premières portions (44).

4. Dispositif de commande (1) selon la revendication 1, **caractérisé en ce que** les moyens de limitation (18a-d, 24a-d) présentent des évidements (29) sous forme de trous oblongs.

5. Dispositif de commande (1) selon la revendication 1, **caractérisé en ce que** plusieurs moyens de limitation (18a-d, 24a-d) sont disposés de manière solidaire en rotation sur une goupille de guidage (22).

6. Dispositif de commande (1) selon la revendication 5, **caractérisé en ce que** la goupille de guidage (22) est retenue de manière desserrable dans un alésage (25, 26) du boîtier (3).

7. Dispositif de commande (1) selon la revendication 6, **caractérisé en ce que** la goupille de guidage (22) présente un rail de guidage (39) pour recevoir les moyens de limitation (18a-d, 24a-d), qui est disposé de manière excentrique par rapport à l'alésage (25, 26) dans le boîtier (3).
